# EUROPEAN PATENT SPECIFICATION

(11) **EP 2 712 895 B1**
(45) Date of publication and mention of the grant of the patent: **18.05.2016**
(21) Application number: 12186131.4
(22) Date of filing: 26.09.2012
(51) Int. Cl.: C09C 1/02, D21H 17/00, D21H 17/63, D21H 19/38, C08K 3/26

(54) **RHEOLOGICALLY STABLE AQUEOUS MINERAL MATERIAL SUSPENSIONS COMPRISING ORGANIC POLYMERS HAVING REDUCED VOLATILE ORGANIC COMPOUND (VOC) CONTENT**
RHEOLOGISCH STABILE WÄSSRIGE MINERALMATERIALSUSPENSIONEN MIT ORGANISCHEN POLYMEREN MIT REDUZIERTEM VOC-GEHALT
SUSPENSIONS DE MATIÈRES MINÉRALES AQUEUSES RHÉOLOGIQUEMENT STABLES COMPRENANT DES POLYMÈRES ORGANIQUES PRÉSENTANT UNE TENEUR EN COMPOSÉ ORGANIQUE VOLATILE (COV) RÉDUITE

(43) Date of publication of application: 02.04.2014
(73) Proprietor: Omya International AG, 4665 Oftringen (CH)
(72) Inventor: Rentsch, Samuel, 4663 Aarburg (CH); Buri, Matthias, 4852 Rothrist (CH); Gane, Patrick A.C., 4852 Rothrist (CH)
(74) Representative: Tiefbrunner, Vera

(56) References cited:
- US-A1- 2011 033 558
- US-A1- 2011 186 773

## Description

The present invention relates to aqueous suspensions of mineral materials, and more specifically to aqueous suspensions with rheological stability comprising a mineral material and at least one organic polymer having reduced VOC (Volatile Organic Compound) content.

Mineral material, with which one skilled in the art is well familiar comprises, for example natural calcium carbonate such as marble, calcite, limestone and/or chalk, and/or synthetic calcium carbonate such as scalenohedral and/or aragonitic and/or calcitic crystal forms and miscellaneous analogous fillers containing calcium carbonates such as dolomite or mixed carbonate based fillers of various metals such as, in particular, calcium associated with magnesium and analogues, various matter such as talc or analogues, and mixtures of these fillers, such as, for example talc-calcium carbonate or calcium carbonate-kaolin mixtures, or mixtures of natural calcium carbonate with aluminium hydroxide, mica or with synthetic or natural fibres or co-structures of minerals such as talc-calcium carbonate or talc-titanium dioxide co-structures.

For a long time now, it has been quite common to use in a wet grinding process , as a grinding aid agent, water soluble polymers based on partially or totally neutralised polyacrylic acid or its derivatives (EP 0 046 573, EP 0 100 947, EP 0 100 948, EP 0 129 329, EP 0 261 039, EP 0 516 656, EP 0 542 643, EP 0 542 644) to provide aqueous mineral suspensions that meet the required refinement and viscosity criteria, but these grinding aid agents are mostly polymerized in presence of organic solvents like isopropanol or in presence of large quantity of catalysts which are harmful for the environment and may be dangerous for the user while environmental regulations are requiring more and more low VOC levels and low content of polluting and/or toxic sub-products.

The skilled man knows another type of solution disclosed in WO 02/49766, EP 0 850 685, WO 2008/010055, WO 2007/072168 to obtain aqueous suspensions of refined mineral material, with a dry matter concentration that can be high, while having a low Brookfield™ viscosity that remains stable over time. This known type of solution discloses the use of specific dispersants like copolymers of acrylic acid with maleic acid or like particular rate of neutralization or like the use of inorganic fluorine compound used to put into aqueous suspension of the mineral particles issuing from the mechanical and/or thermal up-concentration step following a step of wet grinding at a low solid content without the use of dispersing agent nor grinding aid.

Accordingly, there is a need for producing rheologically stable mineral material suspensions comprising organic polymers with reduced VOC content while keeping rheological stability.

With respect to this problem of VOC content, the skilled man knows the solutions disclosed in WO 2005/095466 and in WO 2006/024706 providing water soluble polymers made in water but by the technique of controlled radical polymerization RAFT (Reversible Addition Fragmentation Transfer) having the disadvantage of containing free sulfur atom-containing sub-products or CS₂ or H₂S which are toxic and dangerous for the end-users, in particular during producing aqueous mineral material suspensions.

Additionally, the skilled man in the art knows US 3,006,779, which discloses a completely different solution based on an inorganic dispersant consisting of a homogeneous mixture of sodium phosphate glass, zinc oxide and a potassium or lithium salt or hydroxide.

Finally, the dissertation entitled "Influence of polyelectrolyte adsorption on rheology of concentrated calcite dispersion" (Robert Petzenhauser-1993) which studies the influence of different polyacrylates with regard to the calcite suspension confirms that difficulties are existing in terms of the stability of viscosity of the resulting suspensions with all the studied polyacrylates, including lithium polyacrylates.

Accordingly, none of the known solutions provides the skilled man with a solution to the problem of achieving rheologically stable aqueous suspensions of refined mineral material allowing the use of water-soluble organic polymers with reduced VOC level, with a dry matter concentration that can be high, while having at once a low Brookfield™ viscosity that remains stable over time, a reduced dispersant and/or grinding aid agent content and/or thermally and/or mechanically increased solids content.

Faced with the above-mentioned problem of achieving aqueous mineral material suspensions with the required properties while minimizing the VOC content without impairing the properties of the final products like the optical properties of the paper, the Applicant has found surprisingly that polymers of acrylic and/or methacrylic acid having a weight molecular weight M_{w} in the range from 800 to 8000 g/mol, a polydispersity index Iₚ in the range of from 2 to 3 and prepared by polymerization in water using a compound of the formula (I) 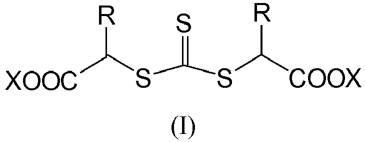 wherein
- X represents Na, K or H, and
- R represents an alkyl chain comprising 1 to 5 carbon atoms and
wherein the weight percentage (weight/weight) between the compound of formula (I) and said monomer(s) is in the range from 0.1 to 2.5 %, preferably from 0.15 to 1.5 %, is especially advantageous to provide high solids and low viscous aqueous slurries with improved rheological stability comprising a mineral material and at least one organic polymer with reduced VOC content.

According to one aspect of the present invention, a rheologically stable aqueous mineral material suspension comprising organic polymers having a reduced content of VOC is provided, comprising
a) at least one mineral material, and
b) at least one polymer of acrylic and/or methacrylic acid,
wherein the at least one polymer of acrylic and/or methacrylic acid
- is obtained by polymerization of acrylic and/or methacrylic acid monomer(s) in water using a compound of formula (I) 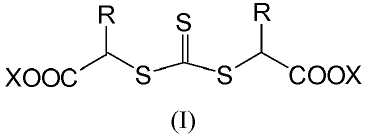 wherein
- X represents Li, Na, K or H, and
- R represents an alkyl chain comprising 1 to 5 carbon atoms, and
wherein the compound of formula (I) is used in an amount of from 0.1 to 2.5 %, preferably from 0.15 to 1.5 wt.% based on the weight of said monomer(s);
- has a weight molecular weight M_{w} of from 800 to 8000 g/mol;
- has a polydispersity index Iₚ in the range from 2 to 3; and
wherein the aqueous mineral material suspension has a content of volatile organic compounds (VOC) of ≤ 20 mg/kg, preferably < 5 mg/kg, more preferably < 1 mg/kg, most preferably < 0.2 mg/kg.

According to another aspect of the present invention, a method for producing an aqueous mineral material suspension with rheological stability comprising organic polymers having reduced VOC is provided comprising the steps of
a) providing at least one mineral material,
b) providing water,
c) providing an aqueous solution of at least one polymer of acrylic and/or methacrylic acid, which
   - is obtained by polymerization of acrylic and/or methacrylic acid monomer(s) in water using a compound of formula (I) 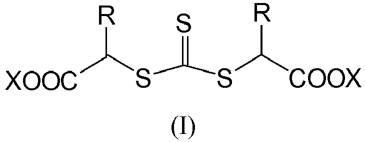 wherein
      - X represents Li, Na, K or H, and
      - R represents an alkyl chain comprising 1 to 5 carbon atoms, and
      wherein the compound of formula (I) is used in an amount of from 0.1 to 2.5 %, preferably from 0.15 to 1.5 wt.% based on the weight of said monomer(s);
   - has a weight molecular weight M_{w} of from 800 to 8000 g/mol;
   - has a polydispersity index Iₚ in the range from 2 to 3;
      d) mixing the mineral material of step a) with the water of step b),
      e) mixing the aqueous solution of at least one polymer of step c) with the mineral material before and/or during and/or after step d);
      wherein the aqueous mineral material suspension has a content of volatile organic compounds (VOC) of ≤ 20 mg/kg, preferably < 5 mg/kg, more preferably < 1 mg/kg, most preferably < 0.2 mg/kg.

According to another embodiment of the invention, the water of step b) is preheated before it is mixed with the mineral material in step d).

The mixing step may be carried out under mixing and/or homogenizing and/or particle dividing conditions at room temperature, i.e. at 20 °C ±2 °C. According to one preferred embodiment, the mixing is carried out at a temperature of from 5 to 140 °C, preferably from 10 to 110 °C and most preferably from 20 °C to 105 °C. According to another preferred embodiment of the invention the mixing is carried out at high temperatures of from 70 °C to 105 °C. Heat may be introduced by internal shear or by an external source or a combination thereof.

The skilled person will adapt these mixing and/or homogenizing conditions such as the mixing speed and temperature according to his process equipment. For example, the mixing and homogenizing may take place by means of a ploughshare mixer. Ploughshare mixers function by the principle of a fluidized bed produced mechanically. Ploughshare blades rotate close to the inside wall of a horizontal cylindrical drum and convey the components of the mixture out of the product bed and into the open mixing space. The fluidized bed produced mechanically ensures intense mixing of even large batches in a very short time. Choppers and/or dispersers are used to disperse lumps in a dry operation. Equipment that may be used in the inventive process is available, for example, from Gebrüder Lödige Maschinenbau GmbH, Germany.

According to one preferred embodiment of the present invention, mixing is carried out using a fluidized bed mixer or ploughshare mixer.

According to one embodiment of the present invention, mixing may be carried out for at least 1 s, preferably for at least 1 min, e.g. for at least 15 min, 30 min, 1 hour, 2 hours, 4 hours, 6 hours, 8 hours, or 10 hours.

According to an optional embodiment of the present invention, the method comprises the additional step of heating the mixture of step d) and/or e) between 50 °C and 120 °C, preferably between 60 °C and 110 °C, and most preferably between 70 °C and 105 °C during and/or after step d) and/or e), e.g., by use of internal shear or by an external source or a combination thereof.

According to one embodiment of the present invention, the aqueous solution of at least one polymer of step c) is, in a first step, mixed with the calcium carbonate containing material of step a), and then, in a second step with the water of step b).

According to one exemplary embodiment of the present invention, the aqueous solution of at least one polymer of step c) is mixed with the mineral material of step d).

According to another embodiment of the present invention, the aqueous solution of at least one polymer of step c) is, in a first step, mixed with the water of step b), and then, the obtained solution is mixed with the mineral material of step a).

According to another embodiment of the present invention, the aqueous solution of at least one polymer of step c) and the mineral material of step a) are mixed in one step with the water of step b).

According to a preferred embodiment of the present invention, the method for producing an aqueous mineral material suspension with improved rheological stability comprising organic polymers with reduced VOC content comprises a grinding step f), wherein step e) can be performed before, during and/or after step f).

As an exemplary embodiment, the mineral material of step a) contains a ground calcium carbonate which is obtained by wet grinding a calcium carbonate containing material and step e) is carried out before and/or during and/or after wet grinding the calcium carbonate containing material.

In general, the grinding step can be carried out with any conventional grinding device, for example, under conditions such that refinement predominantly results from impacts with a secondary body, i.e. in one or more of: a ball mill, a rod mill, a vibrating mill, a roll crusher, a centrifugal impact mill, a vertical bead mill, an attrition mill, a pin mill, a hammer mill, a pulveriser, a shredder, a de-clumper, a knife cutter, or other such equipment known to the skilled man. However, any other device that is able to divide the calcium carbonate containing composite particles formed during method steps d) and/or e) of this exemplary embodiment into smaller particles may be used.

Nevertheless, generally, grinding step f) is carried out preferably in a ball mill, preferably in combination with a cyclone device that re-circulates agglomerates and/or aggregates formed during mixing back to the inlet of the milling device. A cyclone device enables the separation of particulate material such as particles, agglomerates or aggregates, into fractions of smaller and larger particulate material based on gravity.

In case, the mineral material is a calcium carbonate containing mineral powder and comprises a wet ground calcium carbonate containing mineral material, the grinding step may be performed under conditions such that autogenous grinding takes place and/or by horizontal ball milling, and/or other such processes known to the skilled man. The wet processed ground calcium carbonate containing mineral material thus obtained may be washed and dewatered by well-known processes, e.g. by flocculation, filtration or forced evaporation prior to drying.

Furthermore, it can be advantageous that the aqueous mineral material suspension obtained from the step e) or f) is screened and/or concentrated in a further step g).

"Screening" in the context of the present invention is implemented by the well-known devices for "screening" like sieves, grit centrifuges, cyclones, classifiers, etc.. By "screening", it has to be understood a beneficiation by removing coarse particles having a particle size of more than 45 µm.

"Up-concentration" is conducted, e.g. by a thermal up-concentration or a mechanical up-concentration such as by means of a centrifuge, filter-press, tube-press or thermal separation or a mixture thereof.

According to another optional embodiment of the present invention, the method comprises the additional step of heating the mixture of step d) and/or e) between 50 °C and 120 °C, preferably between 60 °C and 110 °C and most preferably between 70 °C and 105 °C during and/or after step d) and/or e), and furthermore, the mixture of step d) and/or e) is concentrated and/or ground during the heating. Heating can be carried out by use of internal shear or by an external source or a combination thereof.

According to still another aspect of the present invention, a method for producing composite particles is provided comprising the steps a) to e) and/or f) and/or g) of the inventive method for producing an aqueous suspension with improved rheological stability comprising a polymer of acrylic and/or methacrylic acid with reduced VOC content and a further step h) of drying the obtained suspension.

"Drying" in the context of the present invention is implemented by the well-known devices for "drying" like jet-driers, spray-driers, etc.

The subsequent step of drying may be carried out in a single step such as spray drying, or in at least two steps.

It is also common that such a mineral material undergoes a beneficiation step (such as a flotation, bleaching or magnetic separation step to remove impurities.

Still another aspect of the present invention is the use of the inventive aqueous mineral material suspension in paper, plastics, paint, coatings, concrete and/or agriculture applications and/or life science applications like water treatment, detergent, cosmetic, food and feed is provided, wherein preferably the aqueous suspension is used in wet end process of a paper machine, in cigarette paper, board, and/or coating applications, or as a support for rotogravure and/or offset and/or ink jet printing and/or continuous ink jet printing and/or flexography and/or electrophotography and/or decoration surfaces, or the aqueous suspension is used to reduce sun light and UV exposure of plant leaves.

Advantageous embodiments of the present invention are defined in the corresponding sub-claims.

In this respect "aqueous solution of a polymer of acrylic acid or methacrylic acid" means a solution of a polymer of acrylic acid and/or methacrylic acid in which water is the solvent.

"VOC content" means the content of any organic compound having an initial boiling point less than or equal to 250 °C measured at a standard atmospheric pressure of 101.3 kPa.

"Reduced VOC content" means that the VOC content is lower than the conventional content of a polymer of acrylic and/or methacrylic acid, and is preferably ≤ 20 mg/kg, preferably < 5 mg/kg, more preferably < 1 mg/kg, most preferably < 0.2 mg/kg of the aqueous mineral material suspension.

In a preferred embodiment the at least one polymer of acrylic and/or methacrylic acid has a reduced content of free polluting sulphur atom-containing sub-products. This means that the content of sulphur atom-containing sub-products which are free to be present in a solution of the polymer is lower than the conventional content of a polymer of acrylic and/or methacrylic acid, and is preferably less than 0.1 mol.-% relating to the total amount of polymer as measured by diffusion nuclear magnetic resonance spectroscopy.

"Sub-products" means products resulting from the degradation of any transfer agents and/or of the compounds of formula (I) present during the polymerization process.

"Weight molecular weight M_{w}" means the average by weight of molecular weights determined using the size exclusion chromatography (SEC) method described in the experimental section.

"Polydispersity index Iₚ " means the weight average molecular weight M_{w} divided by the number average molecular weight Mₙ so that it corresponds to the molecular weight distribution of the different macromolecules within the polymer.

Preferably the aqueous mineral material suspensions according to the invention are high solids suspensions. The term "high solids aqueous mineral material suspension" means suspensions having a solids content of at least 10 wt.-%, preferably at least 45 wt.-%, based on the total weight of the aqueous suspension. According to a preferred embodiment the aqueous suspension according to the present invention has a solids content from 45 to 82 wt.-%, preferably from 60 to 78 wt.-%, and more preferably from 70 to 78 wt.-%, based on the total weight of the aqueous suspension.

Preferably the aqueous mineral material suspensions according to the invention are low viscous aqueous suspensions. The term "Low viscous aqueous suspension" means that the Brookfield viscosity of the aqueous suspension is between 25 and 4000 mPa·s, preferably between 25 and 2000 mPa·s, very preferably between 25 and 1000 mPa·s measured at 20 °C.

"Rheological stability" or "rheologically stable" means that the initial Brookfield™ viscosity of the aqueous mineral material suspension after 1 hour of production is below 4000 mPa·s, preferably below 2000 mPa·s, more preferably below 1000 mPa·s measured after 1 minute of stirring by the use of a RVT model Brookfield™ viscosimeter at room temperature and a rotation speed of 100 rpm (revolutions per minute) with the appropriate spindle, and that the Brookfield™ viscosity of the aqueous mineral material suspension after 8 days of unstirred storage is below 4000 mPa·s, preferably below 2000 mPa·s, more preferably below 1 000 mPa·s measured after 1 minute of stirring by the use of a RVT model Brookfield™ viscosimeter at room temperature and a rotation speed of 100 rpm with the appropriate spindle.

According to a preferred embodiment, the mineral material is selected from calcium carbonate-containing mineral like natural calcium carbonate, synthetic calcium carbonate, surface modified calcium carbonate and miscellaneous analogous fillers containing calcium carbonates such as dolomite or mixed carbonate based fillers of various matter such as clay or talc or analogues or mixtures with synthetic or natural fibers; various matter such as talc or analogues; mica, clay, titanium dioxide, etc. and preferably selected from the group comprising natural calcium carbonate (GCC) such as marble, chalk, limestone and/or calcite; precipitated calcium carbonate (PCC) such as aragonitic PCC, vateritic PCC and/or calcitic PCC, especially prismatic, rhombohedral or scalenohedral PCC; surface modified calcium carbonate; dolomite; talc; bentonite; clay; magnesite; satin white; sepiolite, huntite, diatomite; silicates; and mixtures thereof.

Ground (or natural) calcium carbonate (GCC) is understood to be a naturally occurring form of calcium carbonate, mined from sedimentary rocks such as limestone or chalk, or from metamorphic marble rocks. Calcium carbonate is known to exist as three types of crystal polymorphs: calcite, aragonite and vaterite. Calcite, the most common crystal polymorph, is considered to be the most stable crystal form of calcium carbonate. Less common is aragonite, which has a discrete or clustered needle orthorhombic crystal structure. Vaterite is the rarest calcium carbonate polymorph and is generally unstable. Ground calcium carbonate is almost exclusively of the calcitic polymorph, which is said to be trigonal-rhombohedral and represents the most stable of the calcium carbonate polymorphs. The term "source" of the calcium carbonate in the meaning of the present application refers to the naturally occurring mineral material from which the calcium carbonate is obtained.

The source of the calcium carbonate may comprise further naturally occurring components such as magnesium carbonate, alumino-silicate etc.

According to one embodiment, the calcium carbonate containing material comprises one ground calcium carbonate. According to another embodiment of the present invention, the calcium carbonate-containing material comprises a mixture of two or more ground calcium carbonates selected from different sources of ground calcium carbonate. For example, the at least one ground calcium carbonate may comprise one GCC selected from dolomite and one GCC selected from marble.

According to another embodiment, the calcium carbonate-containing material consists of only one ground calcium carbonate. According to another embodiment of the present invention, the calcium carbonate-containing material consists of a mixture of two or more ground calcium carbonates selected from different sources of ground calcium carbonate.

"Precipitated calcium carbonate" (PCC) in the meaning of the present invention is a synthesized material, generally obtained by precipitation following a reaction of carbon dioxide and calcium hydroxide (hydrated lime) in an aqueous environment or by precipitation of a calcium- and a carbonate ions source in water, for example CaCl₂ and Na₂CO₃, out of solution. Additionally, precipitated calcium carbonate can also be the product of introducing calcium and carbonate salts, calcium chloride and sodium carbonate for example, in an aqueous environment. Further possible ways of producing PCC are the lime soda process, or the Solvay process in which PCC is a by-product of ammonia production. Precipitated calcium carbonate exists in three primary crystalline forms: calcite, aragonite and vaterite, and there are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, and prismatic (P-PCC). Aragonite is an orthorhombic structure with typical crystal habits of twinned hexagonal prismatic crystals, as well as a diverse assortment of thin elongated prismatic, curved bladed, steep pyramidal, chisel shaped crystals, branching tree, and coral or worm-like form. Vaterite belongs to the hexagonal crystal system. The obtained PCC slurry can be mechanically dewatered and dried. PCC may be vaterite, calcite or aragonite.

According to one embodiment of the present invention, the calcium carbonate containing material comprises one precipitated calcium carbonate. According to another embodiment of the present invention, the calcium carbonate containing material comprises a mixture of two or more precipitated calcium carbonates selected from different crystalline forms and different polymorphs of precipitated calcium carbonate. For example, the at least one precipitated calcium carbonate may comprise one PCC selected from S-PCC and one PCC selected from R-PCC.

According to another embodiment, the calcium carbonate containing material consists of only one precipitated calcium carbonate.

According to another embodiment the calcium carbonate containing material is a mixture of ground calcium carbonate and precipitated calcium carbonate.

In addition to calcium carbonate, the calcium carbonate containing material may comprise further particles of calcium associated with magnesium and analogues or derivatives, various silicates such as clay, for example kaolin clay and/or talc and/or mica and/or analogues or derivatives, and mixtures of these fillers, such as, for example, talc-calcium carbonate or calcium carbonate-kaolin mixtures, or may additionally comprise metal oxides such as titanium dioxide and/or aluminium trioxide, metal hydroxides such as aluminium tri-hydroxide, metal salts such as sulfates carbonates such as magnesium carbonate and/or gypsum, satin white and mixtures thereof.

Most preferably, it is a GCC chosen among marble, chalk, calcite or limestone or a PCC chosen among aragonitic PCC or calcitic PCC like rhombohedral PCC or scalenohedral PCC, or mixtures thereof.

According to one embodiment the amount of calcium carbonate in the calcium carbonate containing material is at least 80 wt.-%, preferably at least 95 wt.-%, more preferably between 97 and 100 wt.-%, and most preferably between 98.5 and 99.95 wt.-%, based on the total weight of the calcium carbonate containing material.

According to another embodiment the mineral material has a weight median particle size d₅₀ from 0.1 to 100 µm, preferably from 0.25 to 50 µm, more preferably from 0.3 to 5 µm, and most preferably from 0.4 to 3.0 µm determined as mentioned in the experimental section.

The solids content of the aqueous suspension obtained by the inventive method can be adjusted by the methods known to the skilled person. To adjust the solids content of an aqueous mineral material comprising suspension, the suspension may be partially or fully dewatered by a filtration, centrifugation or thermal separation process. For example, the suspension may be partially or fully dewatered by a filtration process such as nanofiltration or a thermal separation process such as an evaporation process. Alternatively, water may be added to the solid mineral material until the desired solids content is obtained. Additionally or alternatively, a suspension having an appropriate lower content of solid particles may be added to the particulate material of the mixed suspension until the desired solid content is obtained.

According to another embodiment the aqueous suspension has a solids content from 10 to 82 wt.-%, preferably from 45 to 82 wt.-%, more preferably from 60 to 78 wt.-%, and most preferably from 70 to 78 wt.-%, based on the total weight of the aqueous suspension.

According to another embodiment the aqueous suspension has a pH from 7 to 12, preferably from 7.5 to 11, and more preferably from 8.5 to 10 determined as mentioned in the experimental section.

According to the invention, the at least one organic polymer with reduced VOC is a polymer of acrylic and/or methacrylic acid having a weight molecular weight M_{w} in the range from 800 to 8000 g/mol, and a polydispersity index Iₚ in the range from 2 to 3, and is prepared by polymerization in water in presence of a compound of the formula (I) 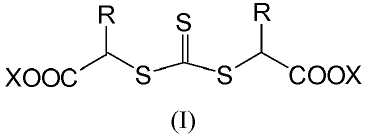 wherein
- X represents Li, Na, K or H, and
- R represents an alkyl chain comprising 1 to 5 carbon atoms and wherein the weight percentage (weight/weight) between the compound of formula (I) and the said monomer(s) is in the range from 0.1 to 2.5 %, preferably from 0.15 to 1.5 %.

The polymerisation may be carried out in the presence of a polymerization initiator.

The polymer of acrylic and/or methacrylic acid preferably contains not more than 0.1 mol.-% of sub-product CS₂, preferably less than 0.05 mol.-%, very preferably less than 0.01 mol.-%.

It has to be noted that said polymer may be totally or partially neutralised by neutralization agents having a monovalent neutralizing function or a polyvalent neutralizing function such as, for the monovalent function, those selected from among the group consisting of the alkaline cations, in particular lithium, sodium, potassium, ammonium or the primary, secondary or tertiary aliphatic and/or cyclic amines such as stearylamine, the ethanolamines (mono-, di-, triethanolamine), mono and diethylamine, cyclohexylamine, methylcyclohexylamine, aminomethylpropanol, morpholine or, for the polyvalent function, those selected from among the group consisting of alkaline earth divalent cations, in particular magnesium and calcium, or zinc or strontium, and of the trivalent cations, as in particular aluminium, or of certain cations of higher valency, and mixtures thereof.

According to another embodiment the at least one organic polymer with reduced VOC content is present in an amount from 0.01 to 10 wt.-%, based on the total weight of the solids in the suspension, preferably from 0.05 to 5 wt.-%, more preferably from 0.1 to 3.0 wt.-%, even more preferably from 0.2 to 2.0 wt.-%, and most preferably from 0.25 to 1.5 wt.-% or from 0.5 to 1.25 wt.-%.

According to another embodiment the at least one organic polymer with reduced VOC content is present in an amount such that the obtained aqueous suspension has a Brookfield™ viscosity between 25 and 4000 mPa·s measured at 20 °C, preferably between 30 to 2000 mPa·s measured at 20 °C, and most preferably between 35 to 1000 mPa·s measured at 20 °C.

A "suspension" or "slurry" in the meaning of the present invention comprises insoluble solids and water, and optionally further additives, and usually contains large amounts of solids and, thus, is more viscous and can be of higher density than the liquid from which it is formed.

Throughout the present document, the "particle size" of a calcium carbonate containing material is described by its distribution of particle sizes. The value dₓ represents the diameter relative to which x % by weight of the particles have diameters less than dₓ. This means that the d₂₀ value is the particle size at which 20 wt.-% of all particles are smaller, and the d₇₅ value is the particle size at which 75 wt.-% of all particles are smaller. The d₅₀ value is thus the weight median particle size, i.e. 50 wt.-% of all grains are bigger or smaller than this particle size. For the purpose of the present invention the particle size is specified as weight median particle size d₅₀ unless indicated otherwise. For determining the weight median particle size d₅₀ value for particles having a d₅₀ value between 0.4 and 2 µm, a Sedigraph 5120 device from the company Micromeritics, USA, can be used.

The Brookfield™ viscosity is defined as the viscosity measured by a Brookfield viscosimeter at 20 °C ±2 °C at 100 rpm and is specified in mPa·s.

According to the present invention the "absolute value" or "modulus" of a real number is the numerical value of the real number without regards to its sign.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that e.g. an embodiment must be obtained by e.g. the sequence of steps following the term "obtained" though such a limited understanding is always included by the terms "obtained" or "defined" as a preferred embodiment.

The scope and interest of the invention will be better understood based on the following examples and figures which are intended to illustrate certain embodiments of the invention and are non-limitative.

### Description of the figure:

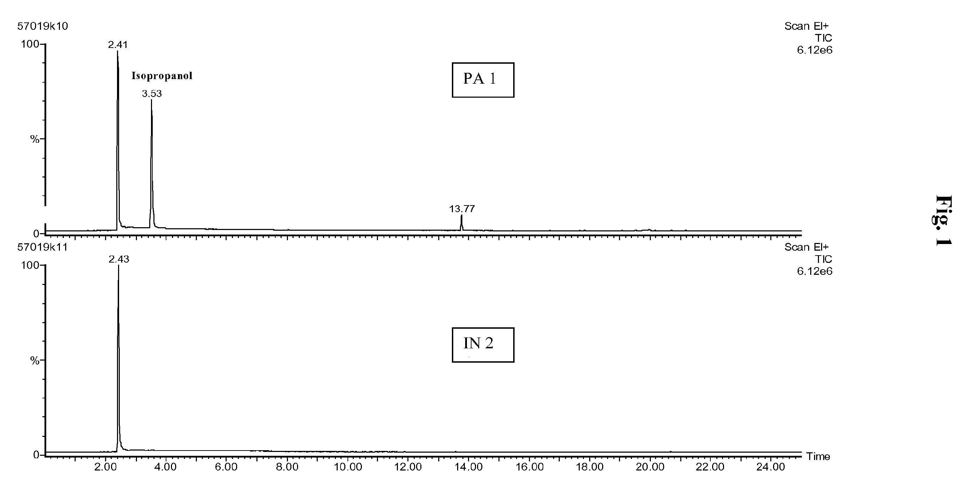

Figure 1 shows GC/MS spectra illustrating the VOC reduction in inventive example 2 compared with comparative example 1.

### Examples

### 1. Measurement methods

### pH measurement

The pH was measured at 25 °C using a Mettler Toledo Seven Easy pH meter and a Mettler Toledo InLab^{®} Expert Pro pH electrode. A three point calibration (according to the segment method) of the instrument was first made using commercially available buffer solutions having pH values of 4, 7 and 10 at 20 °C (from Aldrich). The reported pH values were the endpoint values detected by the instrument (the endpoint was when the measured signal differs by less than 0.1 mV from the average over the last 6 seconds).

### Particle size distribution (mass % particles with a diameter < X) and weight median grain diameter (d₅₀) of particulate material

Weight median grain diameter and grain diameter mass distribution of a particulate material were determined via the sedimentation method, i.e. an analysis of sedimentation behaviour in a gravimetric field. The measurement was made with a Sedigraph^{™} 5120.

The method and the instrument are known to the skilled person and are commonly used to determine grain size of fillers and pigments. The measurement was carried out in an aqueous solution of 0.1 % by weight of Na₄P₂O₇. The samples were dispersed using a high speed stirrer and ultrasonic.

### Weight solids (wt.-%) of a material in suspension

The weight solids were determined by dividing the weight of the solid material by the total weight of the aqueous suspension. The weight solids content was determined using a Moisture Analyser MJ 33, Mettler Toledo.

### Specific surface area (BET) measurement

The specific surface area (in m²/g) of the mineral filler was determined using nitrogen and the BET method, which is well known to the skilled man (ISO 9277:1995). The total surface area (in m²) of the mineral filler was then obtained by multiplication of the specific surface area and the mass (in g) of the mineral filler. The method and the instrument are known to the skilled person and are commonly used to determine specific surface of fillers and pigments.

### Brookfield viscosity

The Brookfield viscosity was measured after 1 minute of stirring by the use of a RVT model Brookfield™ viscometer at a temperature of 20 °C (±2 °C), and a rotation speed of 100 rpm (revolutions per minute) with the appropriate disc spindle from N° 1 to 5. In the following examples the Brookfield viscosity was measured during and after the addition of the polymer to the aqueous slurries to determine the amount of polymer actually needed to obtain a Brookfield viscosity within a defined range.

### Weight molecular weight Mw by GPC (SEC)

A test portion of the polymer solution corresponding to 90 mg of dry matter is introduced into a 10 ml flask. Mobile phase, with an additional 0.04 wt.% of dimethylformamide, is added, until a total mass of 10 g is reached. The composition of this mobile phase at pH 9 is as follows: NaHCO₃: 0.05 mol/l, NaNO₃: 0.1 mol/l, triethanolamine: 0.02 mol/l, 0.03 wt.% of NaN₃.

The SEC equipment is consisting of an isocratic pump of the Waters™ 515 type, the flow rate of which is set at 0.8 ml/min., a Waters™ 717+ sample changer, a kiln containing a precolumn of the "Guard Column Ultrahydrogel Waters™" type which is 6 cm in length and has an internal diameter of 40 mm, followed by a linear column of the "Ultrahydrogel Waters™" type which is 30 cm in length and has an internal diameter of 7.8 mm.

Detection is accomplished by means of a Waters™ 410 type differential refractometer. The kiln is heated to a temperature of 60°C and the refractometer is heated to a temperature of 45°C.

The SEC is calibrated with a series of sodium polyacrylate standards supplied by Polymer Standard Service having maximum molecular weight of between 2000 and 1·10⁶ g/mol and a polydispersity index of between 1.4 and 1.7 and also with a sodium polyacrylate of average weight molecular weight of 5600 g/mol and polydispersity index equal to 2.4.

The calibration graph is of the linear type and takes account of the correction obtained using the flow rate marker (dimethylformamide).

Acquisition and processing of the chromatogram are accomplished through use of the PSS WinGPC Scientific v. 4.02 application. The chromatogram obtained is incorporated in the area corresponding to molecular weights higher than 65 g/mol.

### VOC measurement (expressed as isopropanol/acetone content)

The volatiles in the suspension were measured by GC/MS measurements using the following equipment and parameters.

For this purpose, approximately 0.2 g of carbonate suspension was placed in a GC head space vial and mixed with approximately 50 mg of anhydrous sodium sulphate. After closing the vial the sample was analysed by head space GC/MS as described below.

### Head space mode

HS TurboMatrix 40 Trap Perkin Elmer
Temp. Mode: Oven 90°C, Needle 100°C, Transfer 110°C, Trap Low 40°C, Trap High 280°C
Timing: Thermo 20.0 min, Delay: 0.8 min, Pressurize 1.0 min, Dry Purge 5.0 min, Desorb 0.1 min,
Trap Hold 5.0 min
Column: 107 kPa, Vial: 107 kPa, Desorb: 107 kPa
GC Method AutoSystem XL Perkin Elmer
Column: Optima 5 MS 1.0 µm, 50m * 0.32 mm, Macherey-Nagel
Injector 130°C, Split on
Temp.: 50°C 3.0 min, 10°C/min to 220°C 5.0 min
Pressure: 70 kPa
MS Turbo Mass Perkin Elmer
Solvent Delay 0.0 min
Full Scan 25 to 300 (EI+)
Weight sample: ca.0.2 g

### NMR analysis

The NMR analysis was carried out by diffusion NMR spectroscopy.

The molar percentage of free sulphur atom-containing polymer of acrylic and/or methacrylic acid is determined by the diffusion NMR method, which is well known to the skilled man as DOSY (diffusion ordered spectroscopy) method using a spectrometer Bruker AV 500 equipped with a 5 mm catheter TXI (¹H,¹³C,³¹P).

The samples to be analysed are solubilized in heavy water before examination by NMR ¹H with pre-saturation of the signal of the water and by NMR ¹³C: experiences 1D and 2D (correlations ¹H/¹³C simple and long distance).

### 2. Sample Preparation

### Example 1 (Comparative Example = PA 1)

A natural calcium carbonate of Italian origin was obtained by first autogenously dry grinding by a hammer mill 10 to 300 mm calcium carbonate rocks to a fineness corresponding to a *d₅₀* value of between 42 to 48 µm, and subsequently wet grinding this dry-ground product at 55 to 60 °C in water in a 1.4-litre vertical attritor mill (Dynomill) at a weight solids content of between 75 and 76 wt.-%, based on the total weight of the suspension, until 60% had a diameter below 1 µm and d₅₀ equals 0.75 µm. During the grinding processes, 1.5 dry wt.-%, based on the total weight of solids in the suspension of a 50 mol-% sodium - 50 mol% magnesium neutralized polyacrylate, Mw 5500, produced by radical polymerisation in water/isopropanol was added and mixed during grinding to obtain a Brookfield viscosity between 100 and 200 mPa·s.

### Example 2 (Inventive Example = IN 2)

A natural calcium carbonate of Italian origin was obtained by first autogenously dry grinding by a hammer mill 10 to 300 mm calcium carbonate rocks to a fineness corresponding to a *d₅₀* value of between 42 to 48 µm, and subsequently wet grinding this dry-ground product at 55 to 60 °C in water in a 1.4-litre vertical attritor mill (Dynomill) at a weight solids content of between 75 and 76 wt.-%, based on the total weight of the suspension 60% had a diameter below 1 µm and d₅₀ equals 0.75 µm. During the grinding processes, 1.5 dry wt.-%, based on the total weight of solids in the suspension, of an aqueous solution of a 50 mol-% sodium - 50 mol-% magnesium neutralized polyacrylate, having a Mw equal to 5320 g/mol and an Iₚ of 2.5, produced by polymerisation in water using 0.28 wt % based on the weight of acrylic acid of the compound of formula (I) wherein X represents Na and R is the propyl group, was added and mixed during grinding to obtain a Brookfield viscosity between 150 and 250 mPa·s.

### 3. Results

Particle size distribution after grinding is shown in Table 1:

| **Particle size after grinding [µm]** | **PA 1 [wt.%]** | **IN 2 [wt.%]** |
|---|---|---|
| < 3 | 97.2 | 98.0 |
| <2 | 89.8 | 91.0 |
| < 1 | 60.5 | 62.6 |
| < 0.5 | 36.5 | 38.4 |
| < 0.2 | 18.0 | 16.5 |

Grinding efficiency is shown in Table 2:

**Table 1 and 2 demonstrate that the inventive dispersant performs equal in respect to grinding efficiency and suspension stability compared to the prior art.**

| **Example** | **Grinding time for 1.5 kg of dry calcium carbonate to reach fineness of 90 wt.-% < 2 µm** | **Solids [weight %]** |
|---|---|---|
| PA 1 | 33 min | 74.0 |
| IN 2 | 30 min | 74.5 |

Dispersing properties are shown in Table 3:

**Table 3 demonstrates that the inventive dispersant performs equal to the prior art in respect to suspension stabilization.**

| **Sample** | **Brookfield viscosity at 100 rpm 1 hour after production** | **Brookfield viscosity at 100 rpm 24 hour after production** |
|---|---|---|
| PA 1 | 185 | 176 |
| IN 2 | 165 | 172 |

VOC reduction is shown in Table 4:

**Table 4 and figure 1 show the reduced VOC content as measured in the suspension for inventive example 2 vs. prior art example 1.**

| **Example** | **VOC expressed as acetone/isopropanol content** |
|---|---|
| PA 1 | big peak of 245'469 area units detected at 3.53 min by GC and identified as acetone/isopropanol blend by MS |
| IN 2 | very little peak of 885 area units detected between 3.5 and 3.6 min by GC and identified as acetone/isopropanol blend by MS corresponding to < 0.5 area % compared to PA 1 |

A calibration curve for isopropanol (IPA) was made by using pure isopropanol in water, injecting different volumes into the vials:

| **Conc. of IPA in µg** | **Area under the peak** |
|---|---|
| 0 | 0 |
| 1.031 | 33999 |
| 5.006 | 164726 |
| 10.35 | 320763 |
| 14.998 | 467117 |

### Prior art Sample PA 1

Using the calibration to calculate the absolute value corresponding to the 245'469 area units of "PA 1" equals 7.9 µg isopropanol, which equals 39.6 mg/kg isopropanol/acetone in the suspension.

### Inventive sample IN 2

Using the calibration to calculate the absolute value corresponding to the 885 area units of "IN 2" equals 0.025 µg isopropanol, which equals 0.12 mg/kg isopropanol/acetone in the suspension.

## Claims

1. A rheologically stable aqueous mineral material suspension comprising
a) at least one mineral material, and
b) at least one polymer of acrylic and/or methacrylic acid, wherein the at least one polymer of acrylic and/or methacrylic acid
- is obtained by polymerization of acrylic and/or methacrylic acid monomer(s) in water using a compound of formula (I) 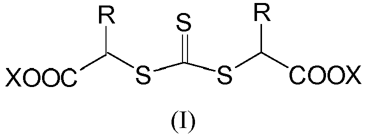 wherein
- X represents Li, Na, K or H, and
- R represents an alkyl chain comprising 1 to 5 carbon atoms, and
wherein the compound of formula (I) is used in an amount of from 0.1 to 2.5 wt%, based on the weight of said monomer(s);
- has a weight molecular weight M_{w} of from 800 to 8000 g/mol;
- has a polydispersity index Iₚ in the range from 2 to 3; and
wherein the aqueous mineral material suspension has a content of volatile organic compounds (VOC) of ≤ 20 mg/kg.

2. The aqueous suspension according to claim 1, wherein the mineral material is selected from calcium carbonate-containing mineral such as natural calcium carbonate, synthetic calcium carbonate, surface modified calcium carbonate and fillers containing calcium carbonates such as dolomite or mixed carbonate based fillers of such as mixtures with clay or talc or mixtures with synthetic or natural fibers; and from talc, mica, clay, titanium dioxide, bentonite, magnesite satin white, sepiolite, huntite, diatomites, silicates and mixtures thereof.

3. The aqueous suspension according to claim 2, wherein the amount of calcium carbonate in the calcium carbonate containing material is at least 80 wt.-%, preferably at least 95 wt.-%, more preferably between 97 and 100 wt.-%, and most preferably between 98.5 and 99.95 wt.-%, based on the total weight of the calcium carbonate containing material.

4. The aqueous suspension according to any one of claims 1 to 3, wherein the mineral material is selected from the group comprising natural calcium carbonate (GCC) such as marble, chalk, limestone and/or calcite; precipitated calcium carbonate (PCC) such as aragonitic PCC, vateritic PCC and/or calcitic PCC, especially prismatic, rhombohedral or scalenohedral PCC and mixtures thereof.

5. The aqueous suspension according to any one of claims 1 to 4, wherein the aqueous suspension has a solids content from 10 to 82 wt.-%, preferably 45 to 82 wt.-%, more preferably from 60 to 78 wt.-%, and most preferably from 70 to 78 wt.-%, based on the total weight of the aqueous suspension.

6. The aqueous suspension according to any one of claims 1 or 5, wherein the mineral material has a weight median particle size d₅₀ from 0.1 to 100 µm, preferably from 0.25 to 50 µm, more preferably from 0.3 to 5 µm, and most preferably from 0.4 to 3.0 µm.

7. The aqueous suspension according to any one of claims 1 to 6, wherein the aqueous suspension has a pH from 7 to 12, preferably from 7.5 to 11, and more preferably from 8.5 to 10.

8. The aqueous suspension according to any one of claims 1 to 7, wherein the at least one polymer of acrylic and/or methacrylic acid is obtained by polymerization of acrylic and/or methacrylic acid monomer(s) in water using a compound of formula (I) in an amount of from 0.15 to 1.5 wt.% based on the weight of said monomer(s).

9. The aqueous suspension according to any one of claims 1 to 8, wherein the aqueous mineral material suspension has a content of volatile organic compounds (VOC) of < 5 mg/kg, preferably < 1 mg/kg, more preferably < 0.2 mg/kg.

10. The aqueous suspension according to any one of claims 1 to 9, wherein the at least one polymer of acrylic and/or methacrylic acid has a content of free sulphur atom containing sub-products of not more than 0.1 mole-%.

11. The aqueous suspension according to claim 10, wherein the at least one polymer of acrylic and/or methacrylic acid contains not more than 0.1 mole-% of sub-product CS₂, preferably less than 0.05 mole-%, very preferably less than 0.01 mole-%.

12. The aqueous suspension according to any one of claims 1 to 11, wherein the at least one polymer of acrylic and/or methacrylic acid is present in an amount from 0.01 to 3.0 wt.-%, more preferably from 0.2 to 2.0 wt.-%, and most preferably from 0.25 to 1.5 wt.-% or from 0.5 to 1.25 wt.-%.

13. The aqueous suspension according to any one of claims 1 to 12, wherein the at least one polymer of acrylic and/or methacrylic acid is present in an amount such that the obtained aqueous suspension has a viscosity between 25 and 4000 mPa·s measured at 20 °C, preferably between 30 to 2000 mPa·s measured at 20 °C, and most preferably between 35 to 1000 mPa·s measured at 20 °C.

14. A method for producing a rheologically stable aqueous mineral material suspension comprising the steps of
a) providing at least one mineral material,
b) providing water,
c) providing an aqueous solution of at least one polymer of acrylic and/or methacrylic acid, which
- is obtained by polymerization of acrylic and/or methacrylic acid monomer(s) in water using a compound of the formula (I) 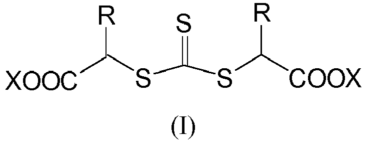 wherein
- X represents Li, Na, K or H, and
- R represents an alkyl chain comprising 1 to 5 carbon atoms, and
wherein the compound of formula (I) is used in an amount of from 0.1 to 2.5 wt% based on the weight of said monomer(s);
- has a weight molecular weight M_{w} of from 800 to 8000 g/mol;
- has a polydispersity index Iₚ in the range from 2 to 3;
d) mixing the mineral material of step a) with the water of step b),
e) mixing the aqueous solution of at least one polymer of step c) with the mineral material before and/or during and/or after step d);
wherein the final aqueous mineral material suspension has a content of volatile organic compounds (VOC) of ≤ 20 mg/kg.

15. The method according to claim 14, wherein the mineral material is selected from calcium carbonate-containing mineral such as natural calcium carbonate, synthetic calcium carbonate, surface modified calcium carbonate and fillers containing calcium carbonates such as dolomite or mixed carbonate based fillers of such as mixtures with clay or talc or mixtures with synthetic or natural fibers; and from talc, mica, clay, titanium dioxide, bentonite, magnesite satin white, sepiolite, huntite, diatomites, silicates and mixtures thereof.

16. The method according to claim 15, wherein the amount of calcium carbonate in the calcium carbonate containing material is at least 80 wt.-%, preferably at least 95 wt.-%, more preferably between 97 and 100 wt.-%, and most preferably between 98.5 and 99.95 wt.-%, based on the total weight of the calcium carbonate containing material.

17. The method according to any one of claims 14 to 16, wherein the mineral material is selected from the group comprising natural calcium carbonate (GCC) such as marble, chalk, limestone and/or calcite; precipitated calcium carbonate (PCC) such as aragonitic PCC, vateritic PCC and/or calcitic PCC, especially prismatic, rhombohedral or scalenohedral PCC and mixtures thereof.

18. The method according to any one of claims 14 to 17, wherein the at least one polymer of acrylic and/or methacrylic acid is obtained by polymerization of acrylic and/or methacrylic acid monomer(s) in water using a compound of formula (I) in an amount of from 0.15 to 1.5 wt.% based on the weight of said monomer(s).

19. The method according to any one of claims 14 to 18, wherein the aqueous mineral material suspension has a content of volatile organic compounds (VOC) of < 5 mg/kg, preferably < 1 mg/kg, more preferably < 0.2 mg/kg.

20. The method according to any one of claims 14 to 19, wherein the water of step b) is preheated before it is mixed with the mineral material in step d).

21. The method according to any one of claims 14 to 20, further comprising a grinding step f), wherein step e) is carried out before, during and/or after step f).

22. The method according to claim 21, further comprising a screening and/or up-concentrating step g) performed after step e).

23. A method according to any one of claims 14 to 22, further comprising a drying step h) of drying the obtained suspension.

24. Use of an aqueous suspension according to any one of claims 1 to 13 in paper, plastics, paint, coatings, concrete and/or agriculture applications and/or life science applications like water treatment, detergent, cosmetic, food and feed, wherein preferably the aqueous suspension is used in wet end process of a paper machine, in cigarette paper, board, and/or coating applications, or as a support for rotogravure and/or offset and/or ink jet printing and/or continuous ink jet printing and/or flexography and/or electrophotography and/or decoration surfaces, or the aqueous suspension is used to reduce sun light and UV exposure of plant leaves.

## Patentansprüche

1. Rheologisch stabile wässrige Mineralmaterialsuspension, umfassend:
a) wenigstens ein Mineralmaterial, und
b) wenigstens ein Acrylsäure- und/oder Methacrylsäure-Polymer, wobei das wenigstens eine Acrylsäure- und/oder Methacrylsäure-Polymer
- erhalten wird durch Polymerisieren von Acrylsäure- und/oder Methacrylsäure-Monomer(en) in Wasser durch Verwenden einer Verbindung der Formel (I) 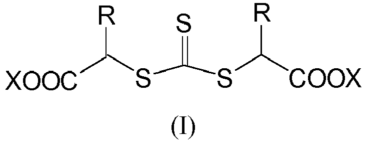 worin:
- X Li, Na, K oder H darstellt, und
- R eine Alkylkette, die 1 bis 5 Kohlenstoffatome umfasst, darstellt, und worin die Verbindung der Formel (I) in einer Menge von 0,1 bis 2,5 Gew.-%, bezogen auf das Gewicht des Monomers bzw. der Monomere, verwendet wird;
- ein mittleres Molekulargewicht M_{w} von 800 bis 8000 g/mol aufweist;
- einen Polydispersionsindex Iₚ im Bereich von 2 bis 3 aufweist; und
wobei die wässrige Mineralmaterialsuspension einen Gehalt an flüchtigen organischen Bestandteilen (VOC) von ≤ 20 mg/kg aufweist.

2. Wässrige Suspension nach Anspruch 1, bei der das Mineralmaterial ausgewählt ist aus Calciumcarbonat enthaltendem Mineral, wie natürlichem Calciumcarbonat, synthetischem Calciumcarbonat, oberflächenmodifiziertem Calciumcarbonat, und Füllstoffen, die Calciumcarbonate enthalten, wie Dolomit, oder Füllstoffen auf Basis von Mischcarbonaten, wie Gemische mit Lehm oder Talk, oder Gemische mit synthetischen oder natürlichen Fasern; und aus Talk, Glimmer, Lehm, Titandioxid, Bentonit, Magnesit, Satinweiss, Sepiolit, Huntit, Diatomiten, Silikaten und Gemischen davon.

3. Wässrige Suspension nach Anspruch 2, bei der die Menge an Calciumcarbonat in dem Calciumcarbonat enthaltenden Material wenigstens 80 Gew.-% beträgt, bevorzugt wenigstens 95 Gew.-%, bevorzugter zwischen 97 und 100 Gew.-%, und am meisten bevorzugt zwischen 98,5 und 99,95 Gew.-%, bezogen auf das Gesamtgewicht des Calciumcarbonat enthaltenden Materials.

4. Wässrige Suspension nach einem der Ansprüche 1 bis 3, bei der das Mineralmaterial ausgewählt ist aus der Gruppe umfassend natürliches Calciumcarbonat (GCC), wie Marmor, Kreide, Kalkstein und/oder Calcit; gefälltes Calciumcarbonat (PCC), wie aragonitisches PCC, vateritisches PCC und/oder calcitisches PCC, insbesondere prismatisches, rhomboedrisches oder scalenoedrisches PCC, sowie Gemische davon.

5. Wässrige Suspension nach einem der Ansprüche 1 bis 4, bei der die wässrige Suspension einen Feststoffgehalt von 10 bis 82 Gew.-% aufweist, bevorzugt 45 bis 82 Gew.-%, bevorzugter von 60 bis 78 Gew.-%, und am meisten bevorzugt von 70 bis 78 Gew.-%, bezogen auf das Gesamtgewicht der wässrigen Suspension.

6. Wässrige Suspension nach einem der Ansprüche 1 bis 5, bei der das Mineralmaterial eine gewichtsgemittelte Partikelgrösse d₅₀ von 0,1 µm bis 100 µm aufweist, bevorzugt von 0,25 µm bis 50 µm, bevorzugter von 0,3 µm bis 5 µm, und am meisten bevorzugt von 0,4 bis 3,0 µm.

7. Wässrige Suspension nach einem der Ansprüche 1 bis 6, bei der die wässrige Suspension einen pH von 7 bis 12 aufweist, bevorzugt von 7,5 bis 11, und bevorzugter von 8,5 bis 10.

8. Wässrige Suspension nach einem der Ansprüche 1 bis 7, bei der das wenigstens eine Acrylsäure- und/oder Methacrylsäure-Polymer erhalten wird durch Polymerisieren von Acrylsäure- und/oder Methacrylsäure-Monomer(en) in Wasser durch Verwenden einer Verbindung der Formel (I) in einer Menge von 0,15 bis 1,5 Gew.-%, bezogen auf das Gewicht des Monomers bzw. der Monomere.

9. Wässrige Suspension nach einem der Ansprüche 1 bis 8, bei der die wässrige Mineralmaterialsuspension einen Gehalt an flüchtigen organischen Bestandteilen (VOC) von < 5 mg/kg aufweist, bevorzugt < 1 mg/kg, bevorzugter < 0,2 mg/kg.

10. Wässrige Suspension nach einem der Ansprüche 1 bis 9, bei der das wenigstens eine Acrylsäure- und/oder Methacrylsäure-Polymer einen Gehalt an Teilprodukten, die freie Schwefelatome enthalten, von nicht mehr als 0,1 Mol-% aufweist.

11. Wässrige Suspension nach Anspruch 10, bei der das wenigstens eine Acrylsäure- und/oder Methacrylsäure-Polymer nicht mehr als 0,1 Mol-% an Teilprodukt CS₂ enthält, bevorzugt weniger als 0,05 Mol-%, sehr bevorzugt weniger als 0,01 Mol-%.

12. Wässrige Suspension nach einem der Ansprüche 1 bis 11, bei der das wenigstens eine Acrylsäure- und/oder Methacrylsäure-Polymer in einer Menge von 0,01 bis 3,0 Gew.-% vorhanden ist, bevorzugter von 0,2 bis 2,0 Gew.-%, und am meisten bevorzugt von 0,25 bis 1,5 Gew.-%, oder von 0,5 bis 1,25 Gew.-%.

13. Wässrige Suspension nach einem der Ansprüche 1 bis 12, bei der das wenigstens eine Acrylsäure- und/oder Methacrylsäure-Polymer in einer solchen Menge vorhanden ist, dass die erhaltene wässrige Suspension eine Viskosität zwischen 25 und 4000 mPa·s, gemessen bei 20°C, aufweist, bevorzugt zwischen 30 bis 2000 mPa·s, gemessen bei 20°C, und am meisten bevorzugt zwischen 35 bis 1000 mPa·s, gemessen bei 20°C.

14. Verfahren zur Herstellung einer rheologisch stabilen wässrigen Mineralmaterialsuspension, umfassend die Schritte:
a) Bereitstellen von wenigstens einem Mineralmaterial,
b) Bereitstellen von Wasser,
c) Bereitstellen von einer wässrigen Lösung von wenigstens einem Acrylsäure- und/oder Methacrylsäure-Polymer, das
- erhalten wird durch Polymerisieren von Acrylsäure- und/oder Methacrylsäure-Monomer(en) in Wasser durch Verwenden einer Verbindung der Formel (I) 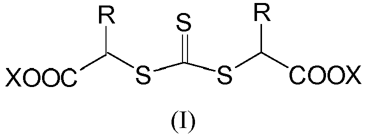 worin:
- X Li, Na, K oder H darstellt, und
- R eine Alkylkette, die 1 bis 5 Kohlenstoffatome umfasst, darstellt, und worin die Verbindung der Formel (I) in einer Menge von 0,1 bis 2,5 Gew.-%, bezogen auf das Gewicht des Monomers bzw. der Monomere, verwendet wird;
- ein mittleres Molekulargewicht M_{w} von 800 bis 8000 g/mol aufweist;
- einen Polydispersionsindex Iₚ im Bereich von 2 bis 3 aufweist;
d) Vermischen des Mineralmaterials von Schritt a) mit dem Wasser von Schritt b),
e) Vermischen der wässrigen Lösung von wenigstens einem Polymer von Schritt c) mit dem Mineralmaterial vor und/oder während und/oder nach Schritt d);
wobei die wässrige Endmineralmaterialsuspension einen Gehalt an flüchtigen organischen Bestandteilen (VOC) von ≤ 20 mg/kg aufweist.

15. Verfahren nach Anspruch 14, bei dem das Mineralmaterial ausgewählt ist aus Calciumcarbonat enthaltendem Mineral, wie natürlichem Calciumcarbonat, synthetischem Calciumcarbonat, oberflächenmodifiziertem Calciumcarbonat, und Füllstoffen, die Calciumcarbonate enthalten, wie Dolomit, oder Füllstoffen auf Basis von Mischcarbonaten, wie Gemische mit Lehm oder Talk, oder Gemische mit synthetischen oder natürlichen Fasern; und aus Talk, Glimmer, Lehm, Titandioxid, Bentonit, Magnesit, Satinweiss, Sepiolit, Huntit, Diatomiten, Silikaten und Gemischen davon.

16. Verfahren nach Anspruch 15, bei dem die Menge an Calciumcarbonat in dem Calciumcarbonat enthaltenden Material wenigstens 80 Gew.-% beträgt, bevorzugt wenigstens 95 Gew.-%, bevorzugter zwischen 97 und 100 Gew.-%, und am meisten bevorzugt zwischen 98,5 und 99,95 Gew.-%, bezogen auf das Gesamtgewicht des Calciumcarbonat enthaltenden Materials.

17. Verfahren nach einem der Ansprüche 14 bis 16, bei dem das Mineralmaterial ausgewählt ist aus der Gruppe umfassend natürliches Calciumcarbonat (GCC), wie Marmor, Kreide, Kalkstein und/oder Calcit; gefälltes Calciumcarbonat (PCC), wie aragonitisches PCC, vateritisches PCC und/oder calcitisches PCC, insbesondere prismatisches, rhomboedrisches oder scalenoedrisches PCC, sowie Gemische davon.

18. Verfahren nach einem der Ansprüche 14 bis 17, bei dem das wenigstens eine Acrylsäure- und/oder Methacrylsäure-Polymer erhalten wird durch Polymerisieren von Acrylsäure- und/oder Methacrylsäure-Monomer(en) in Wasser durch Verwenden einer Verbindung der Formel (I) in einer Menge von 0,15 bis 1,5 Gew.-%, bezogen auf das Gewicht des Monomers bzw. der Monomere.

19. Verfahren nach einem der Ansprüche 14 bis 18, bei dem die wässrige Mineralmaterialsuspension einen Gehalt an flüchtigen organischen Bestandteilen (VOC) von < 5 mg/kg aufweist, bevorzugt < 1 mg/kg, bevorzugter < 0,2 mg/kg.

20. Verfahren nach einem der Ansprüche 14 bis 19, bei dem das Wasser aus Schritt b), bevor es mit dem Mineralmaterial in Schritt d) vermischt wird, vorerhitzt wird.

21. Verfahren nach einem der Ansprüche 14 bis 20, ferner umfassend einen Mahlschritt f), wobei Schritt e) vor, während und/oder nach Schritt f) ausgeführt wird.

22. Verfahren nach Anspruch 21, ferner umfassend einen Sicht- und/oder Aufkonzentrierungsschritt g), der nach Schritt e) durchgeführt wird.

23. Verfahren nach einem der Ansprüche 14 bis 22, ferner umfassend einen Trocknungsschritt h), bei dem die erhaltene Suspension getrocknet wird.

24. Verwendung einer wässrigen Suspension gemäss einem der Ansprüche 1 bis 13 in Papier-, Kunststoff-, Farb-, Beschichtungs-, Beton- und/oder Landwirtschaftsanwendungen und/oder Umweltwissenschaftsanwendungen, wie Wasserbehandlung, Reinigungsmittel, Kosmetika, Nahrungsmittel und Mastfutter, wobei die wässrige Suspension bevorzugt verwendet wird im Wet-End-Verfahren einer Papiermaschine, in Zigarettenpapier, Karton- und/oder Beschichtungsanwendungen, oder als ein Träger für Tiefdruck und/oder Offsetdruck und/oder Tintenstrahldruck und/oder kontinuierlichen Tintenstrahldruck und/oder Flexodruck und/oder Elektrofotographie und/oder Dekoroberflächen, oder die wässrige Suspension wird zur Verringerung der Sonnenlicht- und UV-Bestrahlung von Pflanzenblättern verwendet.

## Revendications

1. Suspension aqueuse de matière minérale rhéologiquement stable comprenant
a) au moins une matière minérale, et
b) au moins un polymère d'acide acrylique et/ou méthacrylique, le polymère d'acide acrylique et/ou méthacrylique
- étant obtenu par polymérisation d'un ou plusieurs monomères d'acide acrylique et/ou méthacrylique dans de l'eau en utilisant un composé de formule (I) 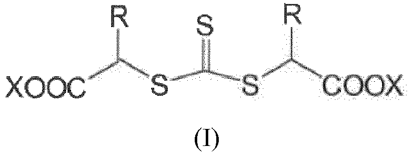 dans laquelle
- X représente Li, Na, K ou H, et
- R représente une chaîne alkyle comprenant 1 à 5 atomes de carbone, et le composé de formule (I) étant utilisé en une quantité de 0,1 à 2,5 % en poids, par rapport au poids total dudit ou desdits monomères;
- ayant un poids moléculaire en poids Mp de 800 à 8000 g/mol;
- ayant un indice de polydispersité Ip compris dans la plage allant de 2 à 3; et
dans laquelle la suspension aqueuse de matière minérale a une teneur en composés organiques volatils (COV) ≤ 20 mg/kg.

2. Suspension aqueuse selon la revendication 1, dans laquelle la matière minérale est choisie parmi un minéral contenant du carbonate de calcium tel que le carbonate de calcium naturel, le carbonate de calcium synthétique, le carbonate de calcium modifié en surface et les charges contenant des carbonates de calcium telles que la dolomite ou des charges à base de carbonates mixtes telles que des mélanges avec de l'argile ou du talc ou des mélanges avec des fibres synthétiques ou naturelles; et le talc, le mica, l'argile, le dioxyde de titane, la bentonite, la magnésite, le blanc satin, la sépiolite, la huntite, les diatomites, les silicates et leurs mélanges.

3. Suspension aqueuse selon la revendication 2, dans laquelle la quantité de carbonate de calcium dans la matière contenant du carbonate de calcium est d'au moins 80 % en poids, de préférence d'au moins 95 % en poids, plus préférablement comprise entre 97 et 100 % en poids, et de manière préférée entre toutes comprise entre 98,5 et 99,95 % en poids, par rapport au poids total de la matière contenant du carbonate de calcium.

4. Suspension aqueuse selon l'une quelconque des revendications 1 à 3, dans laquelle la matière minérale est choisie dans le groupe comprenant le carbonate de calcium naturel (CCG) tel que le marbre, la craie, le calcaire et/ou la calcite; le carbonate de calcium précipité (CCP) tel que le CCP aragonitique, le CCP vatéritique et/ou le CCP calcitique, en particulier le CCP prismatique, rhomboédrique ou scalénoédrique et leurs mélanges.

5. Suspension aqueuse selon l'une quelconque des revendications 1 à 4, dans laquelle la suspension aqueuse a une teneur en matière solide de 10 à 82 % en poids, de préférence de 45 à 82 % en poids, plus préférablement de 60 à 78 % en poids, et de manière préférée entre toutes de 70 à 78 % en poids, par rapport au poids total de la suspension aqueuse.

6. Suspension aqueuse selon l'une quelconque des revendications 1 ou 5, dans laquelle la matière minérale a une taille de particule médiane en poids d50 de 0,1 à 100 µm, de préférence de 0,25 à 50 µm, plus préférablement de 0,3 à 5 µm, et de manière préférée entre toutes de 0,4 à 3,0 µm.

7. Suspension aqueuse selon l'une quelconque des revendications 1 à 6, dans laquelle la suspension aqueuse a un pH de 7 à 12, de préférence de 7,5 à 11, et plus préférablement de 8,5 à 10.

8. Suspension aqueuse selon l'une quelconque des revendications 1 à 7, dans laquelle le polymère d'acide acrylique et/ou méthacrylique est obtenu par polymérisation d'un ou plusieurs monomères d'acide acrylique et/ou méthacrylique dans de l'eau en utilisant un composé de formule (I) en une quantité de 0,15 à 1,5 % en poids, par rapport au poids dudit ou desdits monomères.

9. Suspension aqueuse selon l'une quelconque des revendications 1 à 8, dans laquelle la suspension aqueuse de matière minérale a une teneur en composés organiques volatils (COV) < 5 mg/kg, de préférence < 1 mg/kg, plus préférablement < 0,2 mg/kg.

10. Suspension aqueuse selon l'une quelconque des revendications 1 à 9, dans laquelle le polymère d'acide acrylique et/ou méthacrylique a une teneur en sous-produits contenant un atome de soufre libre de pas plus de 0,1 % en moles

11. Suspension aqueuse selon la revendication 10, dans laquelle le polymère d'acide acrylique et/ou méthacrylique contient pas plus de 0,1 % en moles de sous-produits CS2, de préférence moins de 0,05 % en moles, plus préférablement moins de 0,01 % en moles.

12. Suspension aqueuse selon l'une quelconque des revendications 1 à 11, dans laquelle le polymère d'acide acrylique et/ou méthacrylique est présent en une quantité de 0,01 à 3,0 % en poids, plus préférablement de 0,2 à 2,0 % en poids, et de manière préférée entre toutes de 0,25 à 1,5 % en poids ou de 0,5 à 1,25 % en poids.

13. Suspension aqueuse selon l'une quelconque des revendications 1 à 12, dans laquelle le polymère d'acide acrylique et/ou méthacrylique est présent en une quantité telle que la suspension aqueuse obtenue a une viscosité comprise entre 25 et 4000 mPa•s mesurée à 20 °C, de préférence entre 30 et 2000 mPa•s mesurée à 20 °C, et de manière préférée entre toutes entre 35 et 1000 mPa•s mesurée à 20 °C.

14. Procédé de production d'une suspension aqueuse de matière minérale rhéologiquement stable comprenant les étapes consistant à
a) fournir au moins une matière minérale,
b) fournir de l'eau,
c) fournir une solution aqueuse d'au moins un polymère d'acide acrylique et/ou méthacrylique, qui
- est obtenu par polymérisation d'un ou plusieurs monomères d'acide acrylique et/ou méthacrylique dans de l'eau un utilisant un composé de formule (I) 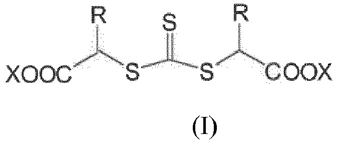 dans laquelle
- X représente Li, Na, K ou H, et
- R représente une chaîne alkyle comprenant 1 à 5 atomes de carbone, et le composé de formule (I) étant utilisé en une quantité de 0,1 à 2,5 % en poids, par rapport au poids total dudit ou desdits monomères ;
- a un poids moléculaire en poids Mp de 800 à 8000 g/mol;
- a un indice de polydispersité Ip compris dans la plage allant de 2 à 3;
d) mélanger la matière minérale de l'étape a) avec l'eau de l'étape b),
e) mélanger la solution aqueuse du polymère de l'étape c) avec la matière minérale avant et/ou pendant et/ou après l'étape d);
dans lequel la suspension aqueuse de matière minérale finale a une teneur en composés organiques volatils (COV) ≤ 20 mg/kg.

15. Procédé selon la revendication 14, dans lequel la matière minérale est choisie parmi un minéral contenant du carbonate de calcium tel que le carbonate de calcium naturel, le carbonate de calcium synthétique, le carbonate de calcium modifié en surface et les charges contenant des carbonates de calcium telles que la dolomite ou des charges à base de carbonates mixtes telles que des mélanges avec de l'argile ou du talc ou des mélanges avec des fibres synthétiques ou naturelles ; et le talc, le mica, l'argile, le dioxyde de titane, la bentonite, la magnésite, le blanc satin, la sépiolite, la huntite, les diatomites, les silicates et leurs mélanges.

16. Procédé selon la revendication 15, dans lequel la quantité de carbonate de calcium dans la matière contenant du carbonate de calcium est d'au moins 80 % en poids, de préférence d'au moins 95 % en poids, plus préférablement entre 97 et 100 % en poids, et de manière préférée entre toutes entre 98,5 et 99,95 % en poids, par rapport au poids total de la matière contenant du carbonate de calcium.

17. Procédé selon l'une quelconque des revendications 14 à 16, dans lequel la matière minérale est choisie dans le groupe comprenant le carbonate de calcium naturel (CCG) tel que le marbre, la craie, le calcaire et/ou la calcite; le carbonate de calcium précipité (CCP) tel que le CCP aragonitique, le CCP vatéritique et/ou le CCP calcitique, en particulier le CCP prismatique, rhomboédrique ou scalénoédrique et leurs mélanges.

18. Procédé selon l'une quelconque des revendications 14 à 17, dans lequel le polymère d'acide acrylique et/ou méthacrylique est obtenu par polymérisation d'un ou plusieurs monomères d'acide acrylique et/ou méthacrylique dans de l'eau en utilisant un composé de formule (I) en une quantité de 0,15 à 1,5 % en poids, par rapport au poids dudit ou desdits monomères.

19. Procédé selon l'une quelconque des revendications 14 à 18, dans lequel la suspension aqueuse de matière minérale a une teneur en composés organiques volatils (COV) < 5 mg/kg, de préférence < 1 mg/kg, plus préférablement < 0,2 mg/kg.

20. Procédé selon l'une quelconque des revendications 14 à 19, dans lequel l'eau de l'étape b) est préchauffée avant d'être mélangée avec la matière minérale dans l'étape d).

21. Procédé selon l'une quelconque des revendications 14 à 20, comprenant en outre une étape de broyage f), l'étape e) étant réalisée avant, pendant et/ou après l'étape f).

22. Procédé selon la revendication 21, comprenant en outre une étape de criblage et/ou de concentration g) réalisée après l'étape e).

23. Procédé selon l'une quelconque des revendications 14 à 22, comprenant en outre une étape de séchage h) pour sécher la suspension obtenue.

24. Utilisation d'une suspension aqueuse selon l'une quelconque des revendications 1 à 13 dans des applications de papier, plastique, peinture, revêtements, béton et/ou agricoles et/ou des applications de sciences de la vie comme le traitement de l'eau, les détergents, les cosmétiques, les produits alimentaires et l'alimentation, dans lesquelles de préférence la suspension aqueuse est utilisée dans un procédé final humide d'une machine à papier, dans du papier à cigarettes, du carton et/ou des applications de revêtement, ou comme support pour rotogravure et/ou offset et/ou impression à jet d'encre et/ou impression à jet d'encre continue et/ou flexographie et/ou électrophotographie et/ou surfaces de décoration, ou la suspension aqueuse est utilisée pour réduire l'exposition à la lumière du soleil et aux UV de feuilles de plantes.
